# EUROPÄISCHE PATENTSCHRIFT

(11) **EP 1 881 047 B1**
(45) Veröffentlichungstag und Bekanntmachung des Hinweises auf die Patenterteilung: **30.09.2009**
(21) Anmeldenummer: 07013439.0
(22) Anmeldetag: 10.07.2007
(51) Int. Cl.: C09J 123/00

(54) **Formstabile Klebemasse und ihre Verwendung für Klebestifte**
Inherently stable adhesive mass and its use in adhesive sticks
Masse adhésive indéformable et son utilisation pour bâtons de colle

(30) Priorität: 18.07.2006 DE 102006033148
(43) Veröffentlichungstag der Anmeldung: 23.01.2008
(73) Patentinhaber: Clariant Finance (BVI) Limited, Road Town, Tortola (VG)
(72) Erfinder: Steib, Christian, DI., 86356 Steppach (DE)
(74) Vertreter: Jacobi, Carola

(56) Entgegenhaltungen:
- WO-A-97/27257
- US-A- 3 539 481
- US-A- 6 136 119

## Beschreibung

Die Erfindung betrifft eine bei Raum- oder Umgebungstemperatur applizierbare, formstabile Klebemasse, die wenigstens ein Polyolefin enthält, sowie die Verwendung der Klebemasse in Klebestiften.

Klebestifte finden wegen ihrer gegenüber flüssigen oder pastösen Klebemassen vergleichsweise einfachen Handhabung verbreitete Anwendung vor allem im Haushalt oder in Büros zum Verkleben von Papier, Kartonagen, Photos, Textilien, Etiketten etc. Sie bieten aufgrund ihrer Zusammensetzung eine wirtschaftliche und umweltfreundliche Alternative zu reaktiven oder Lösemittel enthaltenden Klebstoffen.

Herkömmliche Klebestifte enthalten pastöse oder gelartige Klebstoffe, meist auf wässriger Basis, können aber zusätzlich auch Lösemittel enthalten (vgl. z.B. Kleben - Grundlagen, Technologien, Anwendungen, Springer Verlag, 4. Aufl. 2002). Zur Formgebung und Handhabung wird die Klebemasse als verschiebbar gelagerter Stift, ähnlich einem Lippenstift, in eine feste Hülle eingebracht. In DE 35 00 283 werden z.B. Klebestifte beschrieben, die als Klebstoffe Polyvinylalkohol, Dextrin, wasserlösliche Celluloseether und/oder Polyvinylpyrrolidon enthalten können. In EP 0 278 297 wird als Klebemittel eine Kombination aus Naturkautschuk und klebrig machenden Harzen beschrieben. Zur Formgebung der Stifte und zur Einstellung der Konsistenz werden in der Regel wässrige Seifengele verwendet. Alternativ hierzu sind auch Umsetzungsprodukte aus Sorbit und Benzaldehyd (DE 22 04 482) oder Terephthalsäureamid-Derivate (DE 26 20 721) oder Polyurethane beschrieben. Klebkraft und Wasserbeständigkeit können durch weitere Zusätze wie Melaminformaldehyd- oder Harnstoffformaldehydharze eingestellt werden. Bei der Anwendung der Klebestifte stellt sich ein stabiler adhäsiver Verbund nach dem Verdampfen des Wassers bzw. des Lösungsmittels aus dem Klebefilm ein.

Nachteilig bei allen Klebestiften bekannter Art ist zum einen die weiche pastöse Konsistenz der Klebemasse, die als solche nicht in bequemer Weise direkt auf das zu verklebende Substrat aufgetragen werden kann und daher eine zusätzliche, Halt gebende Hülle mit spezieller Spendefunktion benötigt. Das Zusammensetzen der Hülle und das Einbringen der Klebemasse in dieselbe macht die Herstellung herkömmlicher Klebestifte aufwändig und teuer. Bei der Anwendung der Klebestifte kommt es vor, dass die Klebemassen eine Tendenz zum Schmieren zeigen, teilweise ziehen sie auch Fäden. Außerdem ist die Verwendung der bekannten Klebestifte auf ausreichend dampfpermeable Substrate wie Papier oder Karton beschränkt, weil zum Abbinden der Klebeschicht das enthaltene Wasser bzw. Lösemittel aus der Klebeschicht austreten können und verdunsten muss. Ein weiterer Nachteil bekannter Klebestifte ist, dass sie leicht austrocknen, wenn die Hülle nicht wirklich luftdicht verschlossen ist, und dann ihre Klebefähigkeit vollständig einbüßen.

Der Einsatz von Polyolefinen, auch von solchen, die in Gegenwart von Metallocenen als Katalysator hergestellt sind, als Rezepturbestandteil von Klebemassen ist bekannt (siehe z.B. EP-A-1 631 641). Derartige Klebemassen finden bisher aber ausschließlich als hot-melt-Klebstoffe Verwendung, d.h. die Applikation erfolgt in schmelzflüssigem Zustand bei entsprechend hoher Temperatur. Klebestifte dagegen kommen typischerweise bei Raum- oder Umgebungstemperatur zum Einsatz.

Aufgabe der vorliegenden Erfindung war es, eine formstabile Klebemasse bereit zu stellen, die ohne Erwärmen oder Schmelzen bei Raumtemperatur in einfacher Weise auf Oberflächen aufgetragen werden kann und so zu dauerhaften Verklebungen durch Zusammendrücken der Oberflächen führt. Die formstabile Klebemasse soll eine feste Konsistenz haben und ohne Hüllmaterialien handhabbar sein. Darüber hinaus soll sie frei von Lösemittel, beliebig formbar, toxikologisch und ökologisch unbedenklich sein und eine gute Lagerstabilität über längere Zeitdauer hinweg aufweisen.

Überraschend wurde nun gefunden, dass diese Aufgabe durch eine Klebemasse der eingangs genannten Gattung gelöst wird, deren Kennzeichenmerkmal darin zu sehen ist, dass die Klebemasse mindestens ein Polyolefin enthält, das in Gegenwart von Metallocenen als Katalysator hergestellt wurde und das einen Tropf- oder Erweichungspunkt Ring/Kugel zwischen 50 und 165°C, eine Nadelpenetration von < 50 x 0,1 mm und eine Schmelzviskosität, gemessen bei einer Temperatur von 170°C, im Bereich von 20 bis 40 000 mPa·s, bevorzugt von 50 bis 30 000 mPa·s, besonders bevorzugt von 10 bis 20 000 mPa·s aufweist.

Die erfindungsgemäße Klebemasse eignet sich in besonders vorteilhafter Weise als Alternative zu herkömmlich für Klebestifte verwendete Klebemassen, weil sie eine ausreichende mechanische Festigkeit und Formstabilität besitzt, damit sie ohne Halt gebende Hülle, vergleichbar mit einem Radiergummi, nur eben für Klebezwecke, eingesetzt werden kann. Die erfindungsgemäße Klebemasse zeigt keine Tendenz zum Schmieren und sie zieht auch keine Fäden, weist aber überragende Eigenschaften in Bezug auf die Adhäsion zu den jeweiligen Substraten auf.

Ein weiterer Vorteil der erfindungsgemäßen Klebemasse ist, dass sie auch zum Verkleben von dampfundurchlässigen Substraten wie Kunststoff- oder Metallfolien u.ä. verwendet werden kann, weil sie weder Wasser noch Lösemittel enthält.

Die erfindungsgemäße Klebemasse ist bei Raumtemperatur fest und bleibt formstabil bei Temperaturen bis wenigstens 60°C. Sie ist auch lagerstabil und kann nicht austrocknen. Sie ist von heller Farbe bis farblos, undurchsichtig bis transparent, geruchsneutral, nicht spröde, lichtfest und wasserunempfindlich.

Erfindungsgemäß besonders bevorzugt ist die Klebemasse wasser- und lösemittelfrei.

Erfindungsgemäß weiter bevorzugt ist eine Klebemasse, die wenigstens ein Polyolefin enthält, das einen Tropf- oder Erweichungspunkt Ring/Kugel im Bereich von 60 bis 165 °, bevorzugt von 70 bis 150°C, besonders bevorzugt von 80 bis 140°C aufweist.

Ein weiter bevorzugter Gegenstand der Erfindung ist eine Klebemasse, die das oben genannte Polyolefin enthält, das eine zahlenmittlere Molmasse Mₙ im Bereich von 500 bis 20 000 g/mol, bevorzugt von 800 bis 10 000 g/mol und besonders bevorzugt von 1000 bis 5000 g/mol, besitzt und eine gewichtsmittlere Molmasse M_{w} im Bereich von 1000 bis 40 000 g/mol, bevorzugt von 1600 bis 30 000 g/mol und besonders bevorzugt von 2000 bis 20 000 g/mol.

In einer ebenso bevorzugten Ausführungsform der Erfindung ist das in der Klebemasse enthaltene Polyolefin ein Homopolymeres des Propylens oder höherer 1-Olefine oder ein Copolymeres von Olefinen, umfassend Propylen und/oder höhere 1-Olefine sowie gegebenenfalls Ethylen. Als höhere 1-Olefine werden vorzugsweise lineare oder verzweigte Olefine mit 4 bis 20 C-Atomen, vorzugsweise mit 4 bis 6 C-Atomen, eingesetzt. Diese Olefine können eine mit der olefinischen Doppelbindung in Konjugation stehende aromatische Substitution aufweisen. Als Beispiele für mögliche 1-Olefine seien 1-Buten, 1-Hexen, 1-Octen oder 1-Octadecen sowie Styrol genannt. Die Copolymeren bestehen vorzugsweise zu 70 bis 99,9 und besonders bevorzugt zu 80 bis 99 Gew.-% aus einer Olefinart.

In einer bevorzugten Ausführungsform der Erfindung ist das in der Klebemasse enthaltene Polyolefin ein Copolymeres aus Propylen mit wenigstens einem oder mehreren weiteren Monomeren ausgewählt aus Ethylen und linearen oder verzweigten 1-Olefinen mit 4 bis 20 C-Atomen, vorzugsweise mit 4 bis 10 C-Atomen, wobei der Gehalt an Struktureinheiten, hervorgegangen aus Propylen, bevorzugt 70 bis 99,9, besonders bevorzugt 80 bis 99 Gew.-% beträgt.

In einer weiteren Ausführungsform ist das in der Klebemasse enthaltene Polyolefin ein Copolymeres aus Ethylen und mindestens einem verzweigten oder unverzweigten 1-Olefin mit 3 bis 20 C-Atomen, wobei der Gehalt an Struktureinheiten, hervorgegangen aus Ethylen, 70 bis 99,9 Gew.-% beträgt.

In einer weiteren bevorzugten Ausführungsform der Erfindung ist das in der Klebemasse enthaltene Polyolefin ein Copolymeres aus Propylen und einem oder mehreren weiteren Monomeren ausgewählt aus Ethylen und/oder verzweigten oder unverzweigten 1-Olefinen mit 4 bis 20 C-Atomen, wobei-der Gehalt an Struktureinheiten hervorgegangen aus Ethylen in den Copolymeren von 0,1 bis 30 Gew.-% und der Gehalt an Struktureinheiten, hervorgegangen aus 1-Alken(en), in den Copolymeren im Bereich von 0,1 bis 50 Gew.-% liegt.

In einer besonders bevorzugten Ausführungsform der Erfindung ist das in der Klebemasse enthaltene Polyolefin ein Copolymeres des Propylens mit 0,1 bis 30, insbesondere mit 1 bis 20 Gew.-%, Ethylen.

Das in der erfindungsgemäßen Klebemasse eingesetzte Polyolefin ist dort vorzugsweise in einer Menge von 2 Gew.-% bis 100 Gew.-%, bevorzugt von 30 bis 90 Gew.-%, besonders bevorzugt von 40 bis 70 Gew.-% und ganz besonders bevorzugt von 50 bis 60 Gew.-%, jeweils bezogen auf das Gesamtgewicht der Klebemasse, vorhanden.

In einer weiteren bevorzugten Ausführungsform der Erfindung enthält die Klebemasse zusätzlich zu dem oder den Polyolefin/en ein oder mehrere polar modifizierte Olefin-Homo- und/oder Copolymere.

Polar modifizierte Polymere werden in bekannter Weise aus unpolaren Polymeren durch Oxidation mit sauerstoffhaltigen Gasen, beispielsweise mit Luft, oder durch radikalische Pfropfreaktion mit polaren Monomeren, beispielsweise mit α,β-ungesättigten Carbonsäuren oder deren Derivaten wie Acrylsäure, Maleinsäure oder Maleinsäureanhydrid oder ungesättigten Organosilanverbindungen wie Trialkoxyvinylsilanen hergestellt. Die polare Modifizierung von Metallocen-Polyolefinen durch Oxidation mit Luft ist als solche Stand der Technik und beispielsweise in EP 0 890 583, die Modifizierung durch Pfropfung beispielsweise in EP 0 941 257 beschrieben.

Die erfindungsgemäß eingesetzten polar modifizierten Olefin-Homo- und/oder Copolymeren weisen zahlenmittlere Molmassen Mₙ zwischen 500 und 20 000 g/mol, bevorzugt zwischen 800 und 10 000 g/mol und besonders bevorzugt zwischen 1000 und 3000 g/mol auf.

Die polar modifizierten Olefin-Homo- und/oder Copolymeren werden in der erfindungsgemäßen Klebemasse in Mengen von 0 bis 10 Gew.-%, bevorzugt von 1 bis 8 Gew.-%, besonders bevorzugt von 2 bis 7 Gew.-%, bezogen auf die eingesetzte Gewichtsmenge an Polyolefin/en, eingesetzt.

Die erfindungsgemäße Klebemasse kann als Klebekomponente ein oder mehrere Harze enthalten. Als Harze stehen z.B. übliche sog. aliphatische und cycloaliphatische oder aromatische Kohlenwasserstoffharze zur Verfügung. Diese können durch Polymerisation bestimmter Harzölfraktionen hergestellt werden, die bei der Aufbereitung von Erdöl anfallen. Derartige Harze, die z.B. durch Hydrierung oder Funktionalisierung modifiziert werden können, sind beispielsweise unter den Handelsnamen ^{®}Eastoflex, ^{®}RegalREZ, ^{®}Kristalex, ^{®}Eastotac, ^{®}Piccotac (Eastman Chemical Company) oder ^{®}Escorez (ExxonMobil Chemical Company) erhältlich.

Weiter kommen erfindungsgemäß als Harze Polyterpen-Harze in Betracht, hergestellt durch Polymerisation von Terpenen, beispielsweise Pinen in Gegenwart von Friedel-Crafts-Katalysatoren, desgleichen hydrierte Polyterpene, Copolymere und Terpolymere von natürlichen Terpenen, beispielsweise Styrol/Terpen- oder α-Methylstyrol/Terpen-Copolymere. Weiter in Betracht kommen natürliche und modifizierte Kolophoniumharze, insbesondere Harzester, Glycerinester von Baumharzen, Pentaerithrolester von Baumharzen und Tallölharzen und deren hydrierte Derivate, sowie phenol-modifizierte Pentaerithrolester von Harzen und phenol-modifizierte Terpen-Harze.

Die genannten Harze können in der erfindungsgemäßen Klebemasse einzeln oder in beliebiger Kombination in Gewichtsmengen, bezogen auf das Gesamtgewicht der Klebemasse, von 0 bis 60 Gew.-%, bevorzugt von 10 bis 50 Gew.-%, besonders bevorzugt von 20 bis 40 Gew.-%, enthalten sein.

Eine erfindungsgemäß besonders bevorzugte Klebemasse enthält
a) ein oder mehrere Polyolefin/e, die in Gegenwart von Metallocen als Katalysator hergestellt wurden
b) eine oder mehrere harzartige Klebekomponente/n
c) einen oder mehrere Weichmacher.

Als Weichmacher kommen Paraffinöle oder andere Kohlenwasserstoffe in Frage. Weiter sind aromatische oder aliphatische Dicarbonsäureester, z.B. Phthalsäure- oder Adipinsäureester möglich. Auch können überwiegend oder vollständig amorphe Copolymere, z.B. aus verzweigten oder unverzweigten 1-Olefinen wie Propylen, 1-Buten etc., optional mit Ethylen, verwendet werden. Solche in der Regel bei Raumtemperatur flüssige und mehr oder weniger viskose Polyolefine können beispielsweise mit Ziegler- oder Metallocenkatalysatoren hergestellt werden. Beispiele für derartige mit Metallocenkatalysatoren hergestellte Copolymere sind beschrieben in EP 0 200 351, EP 0 586 777 oder EP 1 554 320.

Die Weichmacher werden in der erfindungsgemäßen Klebemasse in Mengen von 0 bis 10 Gew.-%, bevorzugt 1 bis 8 Gew.-%, besonders bevorzugt von 2 bis 7 Gew.-%, jeweils bezogen auf die eingesetzte Gewichtsmenge an Polyolefin/en, eingesetzt.

Ein ebenfalls besonders bevorzugter Gegenstand dieser Erfindung ist eine formstabile Klebemasse, die bei Raum- oder Umgebungstemperatur ohne Aufschmelzen auf geeignete Substratoberflächen aufgetragen werden kann, bestehend aus
a) einem oder mehreren Polyolefin/en, das/die in Gegenwart von Metallocen als Katalysator hergestellt wurden
b) gegebenenfalls einem oder mehreren polar modifizierten Olefin-Homo- und/oder Copolymeren
c) gegebenenfalls einer oder mehreren Klebekomponente/n
d) gegebenenfalls einem oder mehreren Weichmacher/n.

In besonders vorteilhaften Ausführungsformen enthält die erfindungsgemäße Klebemasse zusätzlich noch Farbmittel wie Farbstoffe und Pigmente.

Als Farbmittel kommen prinzipiell organische oder anorganische Pigmente oder Farbstoffe in Betracht. Typische Beispiele sind organische Pigmente aus der Klasse der Perylen-, Perinon-, Chinacridon-, Chinacridonchinon-, Anthrachinon-, Anthanthron-, Benzimidazolon-, Disazo-, Azo-, Indanthron-, Phthalocyanin-, Triarylcarbonium-, Dioxazin- wie beispielsweise Triphendioxazin-, Aminoanthrachinon-, Diketopyrrolopyrrol-, Indigo-, Thioindigo-, Thiazinindigo-, Isoindolin-, Isoindolinon-, Pyranthron-, Isoviolanthron-, Flavanthron-, Anthrapyrimidin- oder Carbon Black-Pigmente sowie Mischkristalle oder Mischungen davon.

Weitere Beispiele sind anorganische Pigmente aus der Klasse der Titandioxid-, Zinksulfid-, Zinkoxid-, Eisenoxid-, Chromoxid-, Mischmetalloxid- (wie beispielsweise Nickelrutilgelb, Chromrutilgelb, Kobaltblau, Kobaltgrün, Zinkeisenbraun, Spinellschwarz), Cadmium-, Wismuth-, Chromat-, Ultramarin- und Eisenblau-Pigmente und Mischungen daraus, aber genauso gut auch Mischungen aus anorganischen und organischen Pigmenten.

In Betracht kommen ebenso natürliche Farbstoffe, beispielsweise Indigo, Safran, Karmin, Karminsäure, Codenille, Kurkumin, Riboflavin, Riboflavin-5-phosphat, Chlorophylle, Carotine, β-apo-8-Carotinal, Carotinsäureethylester, Lycopin, Capsanthin, Capsorubin, Anthocyane und Beetenrot.

Besonders bevorzugt sind fett- und öllösliche Farbstoffe, insbesondere Azofarbstoffe.

Für die Herstellung der erfindungsgemäß eingesetzten Metallocen-Polyolefine werden Metallocenverbindungen der Formel I eingesetzt.

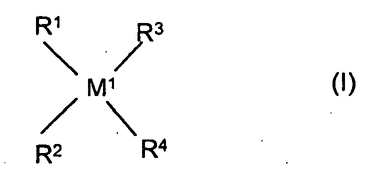

Diese Formel umfasst auch Verbindungen der Formel la, 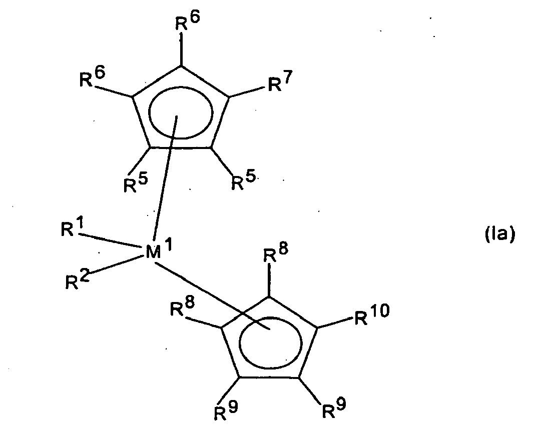 der Formel Ib, 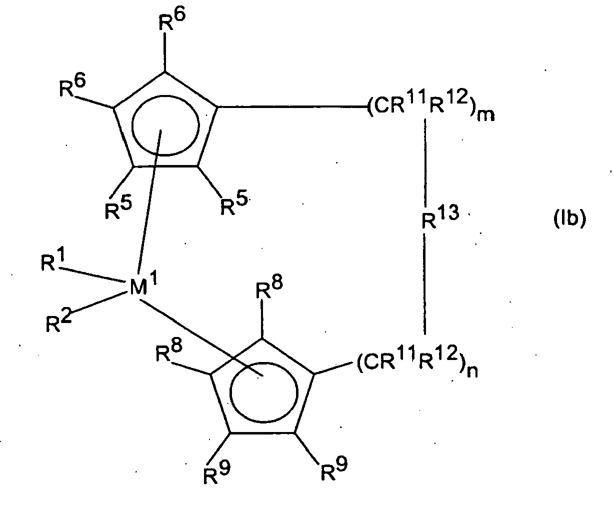 und der Formel Ic

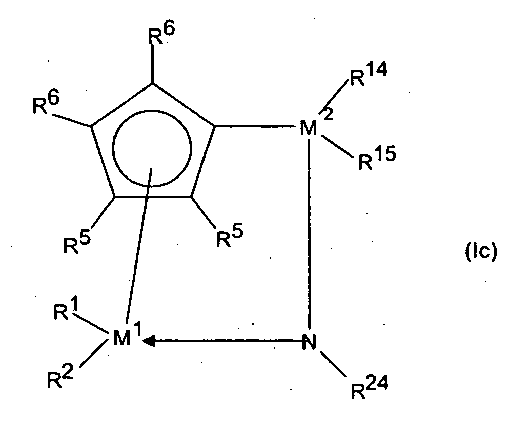

In den Formeln I, Ia und Ib ist M¹ ein Metall der Gruppe IVb, Vb oder VIb des Periodensystems, beispielsweise Titan, Zirkonium, Hafnium, Vanadium, Niob, Tantal, Chrom, Molybdän, Wolfram, vorzugsweise Titan, Zirkonium und Hafnium.

R¹ und R² sind gleich oder verschieden und bedeuten ein Wasserstoffatom, eine C₁-C₁₀-, vorzugsweise C₁-C₃-Alkylgruppe, insbesondere Methyl, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogen-, vorzugsweise Chloratom.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Tetrahydroindenyl, Benzoindenyl oder Fluorenyl, wobei die Grundkörper noch zusätzliche Substituenten tragen oder miteinander verbrückt sein können. Außerdem kann einer der Reste R³ und R⁴ ein substituiertes Stickstoffatom sein, wobei R²⁴ die Bedeutung von R¹⁷ hat und vorzugsweise Methyl, tert.-Butyl oder Cyclohexyl ist.

R⁵, R⁶, R⁷, R⁸, R⁹ und R¹⁰ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁₀-, vorzugsweise C₆-C₈-Arylgruppe, eine C₁-C₁₀-, vorzugsweise C₁-C₃-Alkoxygruppe, einen -NR¹⁶₂-, -SR¹⁶-, -OSiR¹⁶₃-, -SiR¹⁶₃- oder -PR¹⁶₂-Rest, worin R¹⁶ eine C₁-C₁₀-, vorzugsweise C₁-C₃-Alkylgruppe oder C₆-C₁₀-, vorzugsweise C₆-C₈-Arylgruppe oder im Falle Si oder P enthaltender Reste auch ein Halogenatom, vorzugsweise Chloratom ist oder je zwei benachbarte Reste R⁵, R⁶, R⁷, R⁸, R⁹ oder R¹⁰ bilden mit den sie verbindenden C-Atomen einen Ring. Besonders bevorzugte Liganden sind die substituierten Verbindungen der Grundkörper Cyclopentadienyl, Indenyl, Tetrahydroindenyl, Benzoindenyl oder Fluorenyl.

R¹³ ist 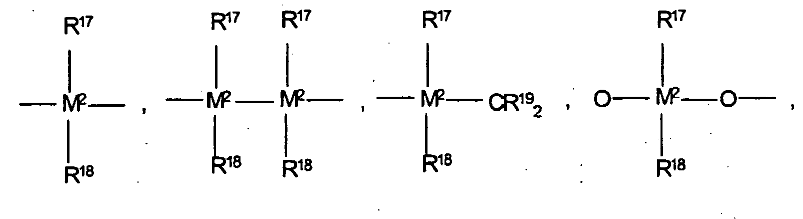 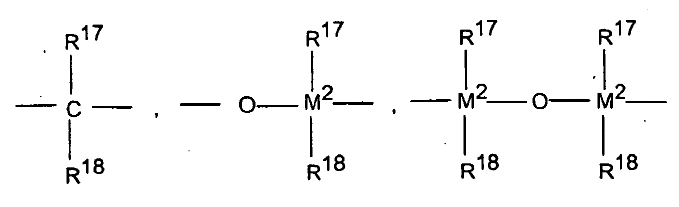 =BR¹⁷, =AIR¹⁷, -Ge-, -Sn-, -O-, -S-, =SO, =SO₂, =NR¹⁷, =CO, =PR¹⁷ oder =P(O)R¹⁷, wobei R¹⁷, R¹⁸ und R¹⁹ gleich oder verschieden sind und ein Wasserstoffatom, ein Halogenatom, vorzugsweise ein Fluor-, Chlor- oder Bromatom, eine C₁-C₃₀-, vorzugsweise C₁-C₄-Alkyl-, insbesondere Methylgruppe, eine C₁-C₁₀-Fluoralkyl-, vorzugsweise CF₃-Gruppe, eine C₆-C₁₀-Fluoraryl-, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxy-, insbesondere Methoxygruppe, eine C₂-C₁₀-, vorzugsweise C₂-C₄-Alkenylgruppe, eine C₇-C₄₀-, vorzugsweise C₇-C₁₀-Aralkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁷R¹⁸, =SiR¹⁷R¹⁸, =GeR¹⁷R¹⁸, -O-, -S-, =SO, =PR¹⁷ oder =P(O)R¹⁷.

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.

R¹⁴ und R¹⁵ haben die Bedeutung von R¹⁷ und R¹⁸.

Bevorzugte Beispiele für geeignete Metallocene sind:
Bis(1,2,3-trimethylcyclopentadienyl)zirkoniumdichlorid,
Bis(1,2,4-trimethylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1-methylindenyl)zirkoniumdichlorid,
Bis(1-n-butyl-3-methyl-cyclopentadienyl)zirkoniumdichlorid,
Bis(2-methyl-4,6-di-i.propyl-indenyl)zirkoniumdichlorid,
Bis(2-methylindenyl)zirkoniumdichlorid,
Bis(4-methylindenyl)zirkoniumdichlorid,
Bis(5-methylindenyl)zirkoniumdichlorid,
Bis(alkylcyclopentadienyl)zirkoniumdichlorid,
Bis(alkylindenyl)zirkoniumdichlorid,
Bis(cyclopentadienyl)zirkoniumdichlorid,
Bis(indenyl)zirkoniumdichlorid,
Bis(methylcyclopentadienyl)zirkoniumdichlorid,
Bis(n-butylcyclopentadienyl)zirkoniumdichlorid,
Bis(octadecylcyclopentadienyl)zirkoniumdichlorid,
Bis(pentamethylcyclopentadienyl)zirkoniumdichlorid,
Bis(trimethylsilylcyclopentadienyl)zirkoniumdichlorid,
Biscyclopentadienylzirkoniumdibenzyl,
Biscyclopentadienylzirkoniumdimethyl,
Bistetrahydroindenylzirkoniumdichlorid,
Dimethylsilyl-9-fluorenylcyclopentadienylzirkoniumdichlorid,
Dimethylsilyl-bis-1-(2,3,5-trimethylcyclopentadienyl)zirkoniumdichlorid,
Dimethylsilyl-bis-1-(2,4-dimethyl-cyclopentadienyl)zirkoniumdichlorid,
Dimethylsilyl-bis-1-(2-methyl-4,5-benzoindenyl)zirkoniumdichlorid,
Dimethylsilyl-bis-1-(2-methyl-4-ethylindenyl)zirkoniumdichlorid,
Dimethylsilyl-bis-1-(2-methyl-4-i-propylindenyl)zirkoniumdichlorid,
Dimethylsilyl-bis-1-(2-methyl-4-phenylindenyl)zirkoniumdichlorid,
Dimethylsilyl-bis-1-(2-methyl-indenyl)zirkoniumdichlorid,
Dimethylsilyl-bis-1-(2-methyltetrahydroindenyl)zirkoniumdichlorid,
Dimethylsilyl-bis-1-indenylzirkoniumdichlorid,
Dimethylsilyl-bis-1-indenylzirkoniumdimethyl,
Dimethylsilyl-bis-1-tetrahydroindenylzirkoniumdichlorid,
Diphenylmethylen-9-fluorenylcyclopentadienylzirkoniumdichlorid,
Diphenylsilyl-bis-1-indenylzirkoniumdichlorid,
Ethylen-bis-1-(2-methyl-4,5-benzoindenyl)zirkoniumdichlorid,
Ethylen-bis-1-(2-methyl-4-phenylindenyl)zirkoniumdichlorid,
Ethylen-bis-1-(2-methyl-tetrahydroindenyl)zirkoniumdichlorid,
Ethylen-bis-1-(4,7-dimethyl-indenyl)zirkoniumdichlorid,
Ethylen-bis-1-indenylzirkoniumdichlorid,
Ethylen-bis-1-tetrahydroindenylzirkoniumdichlorid,
Indenyl-cyclopentadienyl-zirkoniumdichlorid
Isopropyliden(1-indenyl)(cyclopentadienyl)zirkoniumdichlorid,
Isopropyliden(9-fluorenyl)(cyclopentadienyl)zirkoniumdichlorid,
Phenylmethylsilyl-bis-1-(2-methyl-indenyl)zirkoniumdichlorid,
sowie jeweils die Alkyl- oder Aryl-Derivate dieser Metallocendichloride.

Zur Aktivierung der Einzentren-Katalysatorsysteme werden geeignete Cokatalysatoren eingesetzt. Geeignete Cokatalysatoren für Metallocene der Formel I sind aluminiumorganische Verbindungen, insbesondere Alumoxane oder auch aluminiumfreie Systeme wie R²⁰ₓNH₄₋ₓBR²¹₄, R²⁰ₓPH₄₋ₓBR²¹₄, R²⁰₃CBR²¹₄ oder BR ²¹₃. In diesen Formeln bedeutet x eine Zahl von 1 bis 4, die Reste R²⁰ sind gleich oder verschieden, bevorzugt gleich, und bedeuten C₁-C₁₀-Alkyl oder C₆-C₁₈-Aryl oder zwei Reste R²⁰ bilden zusammen mit dem sie verbindenden Atom einen Ring, und die Reste R²¹ sind gleich oder verschieden, bevorzugt gleich, und stehen für C₆-C₁₈-Aryl, das durch Alkyl, Haloalkyl oder Fluor substituiert sein kann. Insbesondere steht R²⁰ für Ethyl, Propyl, Butyl oder Phenyl und R²¹ für Phenyl, Pentafluorphenyl, 3,5-Bistrifluormethylphenyl, Mesityl, Xylyl oder Tolyl.

Zusätzlich ist häufig eine dritte Komponente erforderlich, um einen Schutz von polaren Katalysator-Giften aufrechtzuerhalten. Hierzu sind aluminiumorganische Verbindung wie z.B. Triethylaluminium, Tributylaluminium und andere sowie Mischungen geeignet.

Je nach Verfahren können auch geträgerte Einzentren-Katalysatoren zur Verwendung kommen. Bevorzugt sind Katalysatorsysteme, bei denen die Restgehalte von Trägermaterial und Cokatalysator eine Konzentration von 100 ppm im Produkt nicht überschreiten.

Verfahren zur Herstellung derartiger Polyolefine sind beispielsweise in EP 321 851, in EP 321 852, in EP 384 264, in EP 571 882 und in EP 890 584 beschrieben.

Die erfindungsgemäße Klebemasse kann zusätzlich Polyolefinkunststoffe, Wachse, polare Polymere wie z.B. Ethylen-Vinylacetat-Copolymere, Polyacrylate, Polyester, Polyether, Polycarbonate, Polyacetale, Polyurethane, nicht mit Metallocenkatalysatoren hergestellte Polyolefine, Kautschukpolymere, wie Nitril- oder Styrol/Butadien-Copolymere, Polyisobutylen, Styrol-Butadien-Styrol- oder Styrol-Isopren-Styrol-Blockcopolymere, Kautschuke, Füllstoffe, Stabilisatoren und/oder Antioxidantien enthalten.

Die erfindungsgemäße Klebemasse kann in allen erdenklichen Formen, wie Stiften, Blöcken, Figuren, Kugeln oder Kegeln dargeboten werden und sie ist zum Kleben von Papier, Pappe, Holz, Glas, Kunststoff, z.B. Polyethylen, Polyester sowie Metall, beispielsweise Aluminiumfolie hervorragend geeignet.

### Beispiele

Die nachfolgenden Beispiele sollen die Erfindung näher erläutern, ohne sich jedoch darauf zu beschränken. Alle Prozentangaben sind als Gewichtsprozente zu verstehen.

Die Schmelzviskositäten wurden nach DIN 53019 mit einem Rotationsviskosimeter gemessen.

Die Tropfpunkte wurden nach ASTM D3954, die Erweichungspunkte Ring/Kugel nach ASTM D3104 gemessen.

Die Nadelpenetrationszahl (= NPZ) wurde nach ASTM D 1321 bestimmt.

Das Molmassengewichtsmittel M_{w} und das Molmassenzahlenmittel Mₙ wurden durch Gelpermeationschromatographie bei einer Temperatur von 135°C in 1,2-Dichlorbenzol ermittelt.

Die erfindungsgemäß eingesetzten, in Tabelle 1 aufgeführten Polyolefine 1 bis 3 wurden nach dem in den Dokumenten EP 0 384 264 bzw. EP 0 571 882 angegebenen Verfahren hergestellt. Polyolefin 4 wurde aus Polyolefin 1 durch peroxidinduzierte Pfropfung mit 3 Gew.-% Maleinsäureanhydrid gemäß EP 941 257, allgemeine Vorschrift Beispiele 1 bis 11, hergestellt.

**Tabelle 1: Eingesetzte Polyolefine**

| | Polyolefin 1 | Polyolefin 2 | Polyolefin 3 | Polyolefin 4 |
|---|---|---|---|---|
| Herstellung gemäß | EP 0 384 264 allgem.Vorschrift Bsp. 1-16¹⁾ | EP 0 384 264 allgem. Vorschrift Bsp. 1-16²⁾ | EP 0 571 882 Bsp. 3 | EP 0 941 257 allgem. Vorschrift Bsp. 1-11 |
| Typ | Propylen-Ethylen-Copolymer | Propylen-Ethylen- Copolymer | Propylen-Homopolymerisat | Polyolefin 1, gepfropft mit 3% Maleinsäureanhydrid |
| Erweichungs-/ Tropfpunkt (°C) | 83³⁾ | 88⁴⁾ | 145³⁾ | 80³⁾ |
| Viskosität bei 170 °C (mPa·s) | 180 | 11500 | 101 | 240 |
| Mₙ | 2760 | 8250 | 1980 | 2810 |
| M_{w} | 6320 | 19110 | 3900 | 6460 |

| | | | | |
|---|---|---|---|---|
| ¹⁾ Polymerisationsdaten: Ethyleneinsatz gesamt 400 g, Polymerisationstemperatur 75 °C ²⁾ Ethyleneinsatz gesamt 350 g, Polymerisationstemperatur 65 °C ³⁾ Tropfpunkt ⁴⁾ Erweichungspunkt | | | | |

**Tabelle 2: Beispielrezepturen (Angaben in Gew.-%)**

| Beispiel | 1 | 2 | 3 | 4 | 5 |
|---|---|---|---|---|---|
| Polyolefin 1 | 40 | 40 | 55 | 50 | |
| Polyolefin 2 | 20 | 20 | | | 60 |
| Polyolefin 3 | | | 5 | | |
| Polyolefin 4 | | | | 10 | |
| Sukurez SU 90 | 40 | | 40 | | |
| Foral AX-E | | 40 | | 40 | 35 |
| Weichmacher*) | | | | | 5 |
| Erweichungspkt. (°C) | 77 | 77 | 121 | 124 | 75 |
| NPZ (x 0,1 mm) | 20 | 25 | 20 | 17 | 31 |

| | | | | | |
|---|---|---|---|---|---|
| *) amorphes Copolymeres aus Propylen und Ethylen, hergestellt in Anlehnung an EP 0 200 351, S. 13, Tab. 2, Beispiel 5, Visk./170°C = 320 mPa·s. | | | | | |

Sukurez SU 90: Kohlenwasserstoffharz, Hersteller Kolon Chemical Company; Foral AX-E: Kohlenwasserstoffharz, Hersteller Eastman Chemical Company

Die in Tabelle 2 aufgeführten Rohstoffe wurden in den angegebenen Mischungsverhältnissen aufgeschmolzen und bei einer Temperatur von 180°C gemischt. Die Schmelzemischungen wurden in eine zylindrische Silikonform mit einem Innendurchmesser von 2 cm und einer Länge von 5 cm vergossen. Der erkaltete feste Stift wurde aus der Form entnommen.

Durch Abreiben unter leichtem Druck wurden streifenförmige Klebefilme auf Kopierpapier, auf einer Haushaltsaluminiumfolie und auf einer LDPE-Folie erzeugt. Durch Andrücken einer Gegenfolie auf den Klebefilm wurden stabile Verbindungen zwischen allen denkbaren Kombinationen aus Papier, Aluminium, LDPE und Polyester erzeugt.

## Patentansprüche

1. Formstabile Klebemasse, die bei Raum- oder Umgebungstemperatur auf Substratoberflächen applizierbar ist, **dadurch gekennzeichnet, dass** sie mindestens ein oder mehrere Polyolefin/e enthält, die in Gegenwart von Metallocen als Katalysator hergestellt wurden und die einen Erweichungspunkt Ring/Kugel im Bereich von 50 bis 165°C, eine Nadelpenetrationszahl von < 50 x 0,1 mm und eine Schmelzviskosität, gemessen bei einer Temperatur von 170°C, im Bereich von 20 bis 40 000 mPa·s, bevorzugt von 50 bis 30 000 mPa·s, besonders bevorzugt von 10 bis 20 000 mPa·s, aufweisen.

2. Formstabile Klebemasse gemäß Anspruch 1, **dadurch gekennzeichnet, dass** sie wasser- und lösemittelfrei ist.

3. Formstabile Klebemasse nach Anspruch 1 oder 2, **dadurch gekennzeichnet, dass** das oder die Polyolefin/e einen Tropf- oder Erweichungspunkt Ring/Kugel im Bereich von 60 bis 165°C, bevorzugt von 70 bis 150°C, besonders bevorzugt von 80 bis 140°C, besitzen.

4. Formstabile Klebemasse nach einem oder nach mehreren der Ansprüche 1 bis 3, **dadurch gekennzeichnet, dass** das oder die Polyolefin/e eine zahlenmittlere Molmasse Mₙ im Bereich von 500 bis 20 000 g/mol, bevorzugt von 800 bis 10 000 g/mol und eine gewichtsmittlere Molmasse M_{w} im Bereich von 1000 bis 40 000 g/mol, bevorzugt von 1600 bis 30 000 g/mol aufweisen.

5. Formstabile Klebemasse nach einem oder nach mehreren der Ansprüche 1 bis 4, **dadurch gekennzeichnet, dass** das oder die Polyolefin/e Homopolymere von linearen oder verzweigten 1-Olefinen mit 3 bis 20 C-Atomen oder Copolymere von Olefinen, umfassend lineare oder verzweigte 1-Olefine mit 3 bis 20 C-Atomen und ggf. Ethylen sind.

6. Formstabile Klebemasse nach einem oder nach mehreren der Ansprüche 1 bis 5, **dadurch gekennzeichnet, dass** das oder die Polyolefin/e Homopolymere des Propylens oder Copolymere des Propylens mit einem oder mehreren weiteren Monomeren ausgewählt aus Ethylen und linearen oder verzweigten 1-Olefinen mit 4 bis 20 C-Atomen sind, wobei bei den Copolymeren der Gehalt an Struktureinheiten, hervorgegangen aus Propylen, zwischen 70 und 99,9, bevorzugt zwischen 80 und 99 Gew.-% beträgt.

7. Formstabile Klebemasse nach einem oder nach mehreren der Ansprüche 1 bis 6, **dadurch gekennzeichnet, dass** sie zusätzlich ein oder mehrere polar modifizierte Olefin-Homo- und/oder Copolymere enthalten.

8. Formstabile Klebemasse nach einem oder nach mehreren der Ansprüche 1 bis 7, **dadurch gekennzeichnet, dass** ihr Gehalt von in Gegenwart von Metallocen hergestellten Polyolefin(en) im Bereich von 2 bis 100 Gew.-%, bevorzugt von 30 bis 90 Gew.-%, besonders bevorzugt von 40 bis 70 und insbesondere bevorzugt von 50 bis 60 Gew.-% liegt.

9. Formstabile Klebemasse nach einem oder nach mehreren der Ansprüche 1 bis 7, **dadurch gekennzeichnet, dass** sie zusätzlich ein oder mehrere Harz/e in einer Menge im Bereich von 0 bis 60 Gew.-%, bevorzugt von 10 bis 50 Gew.-%, besonders bevorzugt von 20 bis 40 Gew.-% enthält.

10. Formstabile Klebemasse nach einem oder nach mehreren der Ansprüche 1 bis 8, **dadurch gekennzeichnet, dass** sie zusätzlich Weichmacher enthält.

11. Formstabile Klebemasse nach einem oder nach mehreren der Ansprüche 1 bis 9, **dadurch gekennzeichnet, dass** sie zusätzlich weitere unpolare oder polare Polyolefine, Wachse, Farbmittel, Füllstoffe, Stabilisatoren und/oder Antioxidantien enthält.

12. Verwendung der formstabilen Klebemasse nach einem oder nach mehreren der Ansprüche 1 bis 10 für Klebestifte in Form von Stiften, Blöcken, Figuren, Kugeln oder Kegeln.

## Claims

1. A dimensionally stable adhesive which can be applied at room or ambient temperature to substrate surfaces, comprising at least one, or two or more, polyolefin(s) prepared in the presence of metallocene catalyst and having a ring & ball softening point in the range from 50 to 165°C, a needle penetration number of < 50 x 0.1 mm, and a melt viscosity, measured at a temperature of 170°C, in the range from 20 to 40 000 mPa·s, preferably from 50 to 30 000 mPa·s, more preferably from 10 to 20 000 mPa·s.

2. The dimensionally stable adhesive as claimed in claim 1, being water- and solvent-free.

3. The dimensionally stable adhesive as claimed in claim 1 or 2, wherein the polyolefin(s) possess a drop point or ring & ball softening point in the range from 60 to 165°C, preferably from 70 to 150°C, more preferably from 80 to 140°C.

4. The dimensionally stable adhesive as claimed in one or more of claims 1 to 3, wherein the polyolefin(s) have a number-average molar mass Mₙ in the range from 500 to 20 000 g/mol, preferably from 800 to 10 000 g/mol, and a weight-average molar mass M_{w} in the range from 1000 to 40 000 g/mol, preferably from 1600 to 30 000 g/mol.

5. The dimensionally stable adhesive as claimed in one or more of claims 1 to 4, wherein the polyolefin(s) are homopolymers of linear or branched 1-olefins having 3 to 20 carbon atoms or are olefin copolymers comprising linear or branched 1-olefins having 3 to 20 carbon atoms and, where appropriate, ethylene.

6. The dimensionally stable adhesive as claimed in one or more of claims 1 to 5, wherein the polyolefins(s) are propylene homopolymers or copolymers of propylene with one or more further monomers selected from ethylene and linear or branched 1-olefins having 4 to 20 carbon atoms, the amount of structural units originating from polypropylene in the case of the copolymers being between 70% and 99.9%, preferably between 80% and 99% by weight.

7. The dimensionally stable adhesive as claimed in one or more of claims 1 to 6, further comprising one or more polar-modified olefin homopolymers and/or copolymers.

8. The dimensionally stable adhesive as claimed in one or more of claims 1 to 7, the amount therein of polyolefin(s) prepared in the presence of metallocene being in the range from 2% to 100% by weight, preferably from 30% to 90% by weight, more preferably from 40% to 70%, and with particular preference from 50% to 60% by weight.

9. The dimensionally stable adhesive as claimed in one or more of claims 1 to 7, further comprising one or more resins in an amount in the range from 0% to 60%, preferably from 10% to 50%, more preferably from 20% to 40% by weight.

10. The dimensionally stable adhesive as claimed in one or more of claims 1 to 8, further comprising plasticizers.

11. The dimensionally stable adhesive as claimed in one or more of claims 1 to 9, further comprising additional, apolar or polar, polyolefins, waxes, colorants, fillers, stabilizers and/or antioxidants.

12. The use of the dimensionally stable adhesive as claimed in one or more of claims 1 to 10 for glue sticks in the form of sticks, blocks, figures, spheres or cones.

## Revendications

1. Matière adhésive à stabilité dimensionnelle, qui est applicable sur des surfaces de supports à la température ambiante ou de l'environnement, **caractérisée en ce qu'**elle contient au moins une ou plusieurs polyoléfine(s) qui a/ont été préparée(s) en présence de métallocène en tant que catalyseur et qui présente(nt) un point de ramollissement cône/anneau dans la plage de 50 à 165 °C, un indice de pénétration d'aiguille de < 50 x 0,1 mm et une viscosité à chaud, mesurée à une température de 170 °C, dans la plage de 20 à 40 000 mPa·s, de préférence de 50 à 30 000 mPa·s, de façon particulièrement préférée de 10 à 20 000 mPa·s.

2. Matière adhésive à stabilité dimensionnelle selon la revendication 1, **caractérisée en ce qu'**elle est exempte d'eau et de solvant.

3. Matière adhésive à stabilité dimensionnelle selon la revendication 1 ou 2, **caractérisée en ce que** la ou les polyoléfine(s) on un point de goutte ou de ramollissement cône/anneau dans la plage de 60 à 165 °C, de préférence de 70 à 150 °C, de façon particulièrement préférée de 80 à 140 °C.

4. Matière adhésive à stabilité dimensionnelle selon une ou plusieurs des revendications 1 à 3, **caractérisée en ce que** la ou les polyoléfine(s) présente (nt) une masse moléculaire moyenne en nombre Mₙ dans la plage de 500 à 20 000 g/mole, de préférence de 800 à 10 000 g/mole et une masse moléculaire moyenne en poids M_{w} de 1 000 à 40 000 g/mole, de préférence de 1 600 à 30 000 g/mole.

5. Matière adhésive à stabilité dimensionnelle selon une ou plusieurs des revendications 1 à 4, **caractérisée en ce que** la/les polyoléfine(s) sont des homopolymères de 1-oléfines linéaires ou ramifiées ayant de 3 à 20 atomes de carbone ou des copolymères d'oléfines comprenant des 1-oléfines linéaires ou ramifiées ayant de 3 à 20 atomes de carbone et éventuellement d'éthylène.

6. Matière adhésive à stabilité dimensionnelle selon une ou plusieurs des revendications 1 à 5, **caractérisée en ce que** la ou les polyoléfine(s) sont des homopolymères du propylène ou des copolymères du propylène avec un ou plusieurs autres monomères choisis parmi l'éthylène et des 1-oléfines linéaires ou ramifiées ayant de 4 à 20 atomes de carbone, la teneur des copolymères en motifs structuraux dérivés de propylène étant comprise entre 70 et 99,9, de préférence entre 80 et 99 % en poids.

7. Matière adhésive à stabilité dimensionnelle selon une ou plusieurs des revendications 1 à 6, **caractérisée en ce qu'**elle contient en outre un ou plusieurs homopolymères et/ou copolymères d'oléfines à modification polaire.

8. Matière adhésive à stabilité dimensionnelle selon une ou plusieurs des revendications 1 à 7, **caractérisée en ce que** sa teneur en polyoléfine(s) préparée(s) en présence de métallocène se situe dans la plage de 2 à 100 % en poids, de préférence de 30 à 90 % en poids, de façon particulièrement préférée de 40 à 70 et de façon tout particulièrement préférée de 50 à 60 % en poids.

9. Matière adhésive à stabilité dimensionnelle selon une ou plusieurs des revendications 1 à 7, **caractérisée en ce qu'**elle contient en outre une ou plusieurs résine(s) en une quantité dans la plage de 0 à 60 % en poids, de préférence de 10 à 50 % en poids, de façon particulièrement préférée de 20 à 40 % en poids.

10. Matière adhésive à stabilité dimensionnelle selon une ou plusieurs des revendications 1 à 8, **caractérisée en ce qu'**elle contient en outre des plastifiants.

11. Matière adhésive à stabilité dimensionnelle selon une ou plusieurs des revendications 1 à 9, **caractérisée en ce qu'**elle contient en outre des polyoléfines polaires ou non polaires, des cires, des colorants, des charges, des stabilisants et/ou des antioxydants.

12. Utilisation de la matière adhésive à stabilité dimensionnelle selon une ou plusieurs des revendications 1 à 10, pour des bâtons de colle sous forme de bâtons, de blocs, de figurines, de boules ou de cônes.
